# EUROPEAN PATENT SPECIFICATION

(11) **EP 3 581 401 B1**
(45) Date of publication and mention of the grant of the patent: **10.11.2021**
(21) Application number: 18751985.5
(22) Date of filing: 13.02.2018
(51) Int. Cl.: B60C 11/00, B60C 11/03, B60C 11/117

(54) **CONSTRUCTION VEHICLE TIRE**
BAUFAHRZEUGREIFEN
PNEU DE VÉHICULE DE CONSTRUCTION

(30) Priority: 13.02.2017 JP 2017023805
(43) Date of publication of application: 18.12.2019
(73) Proprietor: Bridgestone Corporation, Tokyo 104-8340 (JP)
(72) Inventor: TAKAGI, Kota, Tokyo 104-8340 (JP)
(74) Representative: Oxley, Robin John George
(86) International application number: PCT/JP2018/004809
(87) International publication number: WO 2018/147459

(56) References cited:
- WO-A1-2013/125246
- JP-A- 2005 067 267
- JP-A- 2007 191 093
- JP-A- 2007 230 399
- JP-A- 2012 001 154
- JP-A- 2012 179 948
- JP-A- 2014 144 763
- JP-A- 2014 172 599
- JP-B2- 5 719 935
- US-A1- 2010 108 214

## Description

### [Background Art]

In a tire mounted to a dump truck or the like that travels on an uneven ground such as a mine, which is a so-called construction vehicle tire, it is important to suppress a temperature increase of a tread. Thus, a structure that cools the tread by forming a slope-like notch groove, which is inclined toward an inner side in a tire radial direction, on the tread has been known (for example, Patent Literature 1).

Specifically, air flows into the slope-like notch groove in accordance with rolling of the tire, so that heat exchange at a surface of the tread is facilitated. With this, the temperature increase of the tread can be suppressed. Attention is also drawn to the disclosures of JP2014-144763A, WO2013/125246A1, JP2012-179948A, JP2014-172599A, JP2012-001154A.

### [Citation List]

### [Patent Literature]

[PTL 1] Japanese Patent No. 5719935 B

### [Summary of Invention]

In recent years, it is strongly desired that the construction vehicle tire described above can adapt to a high speed and a large load of a vehicle. Such a desire causes a further temperature increase of the tread.

The temperature increase of the tread can be further suppressed by increasing the number of the slope-like notch grooves described above, however in such a case, other performance (for example, wear resistant performance) might be deteriorated.

Accordingly, an object of the present invention is, in consideration of the problem described above, to provide a construction vehicle tire capable of cooling a whole of a tread further efficiently while suppressing an influence to other performance.

A construction vehicle tire according to a first aspect of the present invention is provided as claimed in claim 1.

A construction vehicle tire according to a second aspect of the present invention is provided as claimed in claim 2.

A construction vehicle tire according to a third aspect of the present invention is provided as claimed in claim 3.

### [Brief Description of Drawings]

[Fig. 1] Fig. 1 is a plane developed view illustrating a part of a construction vehicle tire 10.
[Fig. 2] Fig. 2 is a cross-sectional view along a tire circumferential direction illustrating a width direction narrow groove 100 and a notch groove 110.
[Fig. 3] Fig. 3 is a perspective view illustrating the notch groove 110.
[Fig. 4] Fig. 4 is a cross-sectional view along the tire circumferential direction illustrating a width direction narrow groove 200 and notch grooves 210, 220.
[Fig. 5] Fig. 5 is a perspective view illustrating the notch grooves 210, 220.
[Fig. 6] Fig. 6 is a plane developed view illustrating a part of a construction vehicle tire 10A according to one modified example.
[Fig. 7] Fig. 7 is a plane developed view illustrating a part of a construction vehicle tire 10B according to another modified example.

### [Description of Embodiments]

Hereinafter, an embodiment of the present invention will be described with reference to the drawings. The same reference signs or similar reference signs are assigned to the same functions or the same components and the description thereof is therefore omitted.

### (1) Schematic configuration of construction vehicle tire

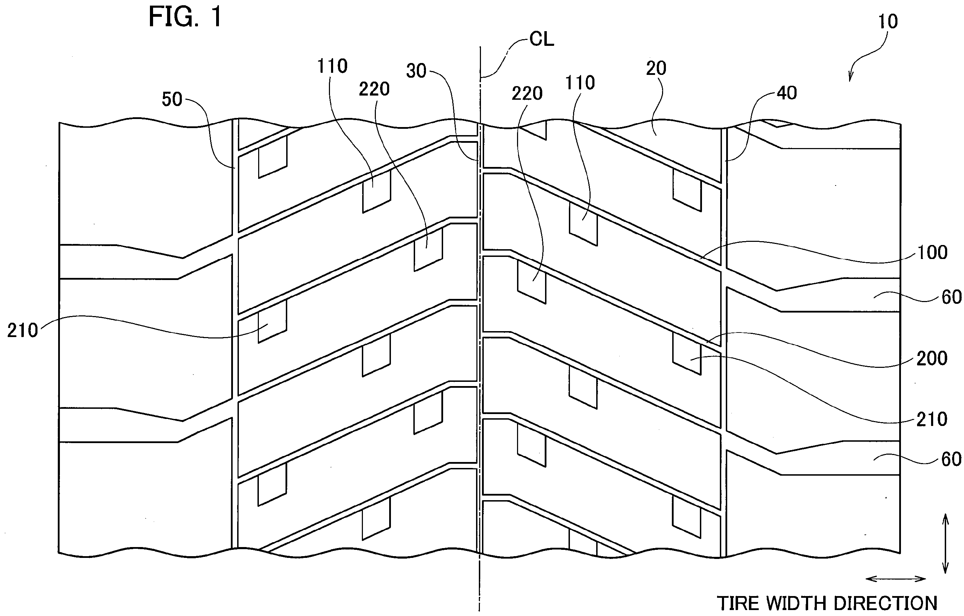

Fig. 1 is a plane developed view illustrating a part of a construction vehicle tire 10 according to the present embodiment. The construction vehicle tire 10 is formed as a pneumatic tire mounted to a dump truck or the like that travels on an uneven ground such as a mine.

A size of the construction vehicle tire 10 is not especially limited, however a tire of 49, 51, 57, or 63 inches is widely adopted. The construction vehicle tire 10 may be also called an ORR (Off-the-Road Radial) tire. However, the construction vehicle tire 10 is not always limited to the radial tire.

As shown in Fig. 1, the construction vehicle tire 10 is provided with a tread 20 that contacts a road surface. A plurality of circumferential direction grooves 30, 40, 50 extended in a tire circumferential direction is formed on the tread 20. Further, a plurality of width direction narrow grooves 100, 200 extended in a tire width direction is formed on the tread.

The construction vehicle tire 10 has a substantially symmetrical shape with respect to a tire equatorial line CL. However, the width direction grooves 100, 200 at one side and another side with respect to the tire equatorial line CL are slightly shifted to each other in the tire circumferential direction.

The circumferential direction groove 30 is communicated with the width direction narrow groove 100 and the width direction narrow groove 200. The circumferential direction groove 30 is formed at a position including the tire equatorial line CL. In the present embodiment, the circumferential direction groove 30 is served as a center circumferential direction groove.

The circumferential direction groove 40 is also communicated with the width direction narrow groove 100. The circumferential direction groove 40 is formed at an outer side in the tire width direction with respect to the width direction narrow groove 100. Further, the circumferential direction groove 40 is communicated with the width direction narrow groove 200. The circumferential direction groove 40 is formed at an outer side in the tire width direction with respect to the width direction narrow groove 200.

The circumferential direction groove 50 is formed at a side opposite to the circumferential direction groove 40 with respect to the tire equatorial line CL. The circumferential direction groove 50 has a shape similar to that of the circumferential direction groove 40. In the resent embodiment, the circumferential direction grooves 40, 50 are served as an outer side circumferential direction groove. Hereinafter, a configuration at a side of the circumferential direction groove 40 with respect to the tire equatorial line CL is described.

A shoulder lug groove 60 is formed on the tread 20. The shoulder lug groove 60 is formed at the outer side in the tire width direction with respect to the width direction narrow groove 100. The shoulder lug groove 60 is communicated with the width direction narrow groove 100 through the circumferential direction groove 40. The shoulder lug groove 60 is extended along the tire width direction.

The width direction narrow groove 100 is formed as a narrow groove extended in the tire width direction. The narrow groove denotes a groove having at least a width smaller than a depth of the groove. In the present embodiment, the width direction narrow groove 100 is served as a first width direction narrow groove.

In the present embodiment, a width of the width direction narrow groove 100 is approximately 10 mm, and a depth of the width direction narrow groove 100 is approximately 100 mm (in a tire of 63 inches). The width and the depth of the groove may be changed as needed in accordance with a size or a specification of the tire. In tires of 49 inches to 63 inches adopted as the construction vehicle tire, the width of the groove is approximately 3 mm to 10 mm, and the depth of the groove is approximately 40 mm to 100 mm. Further, in the present embodiment, the width direction narrow groove 100 is slightly inclined against the tire width direction.

The width direction narrow groove 200 is also formed as a narrow groove extended in the tire width direction. The width direction narrow groove 200 is adjacent to the width direction narrow groove 100 in the tire circumferential direction. In the present embodiment, the width direction narrow groove 200 is served as a second width direction narrow groove.

A plurality of notch grooves 110, 210, 220 is formed on the tread 20. The notch groove 110 is formed in a slope-like shape and communicated with the width direction narrow groove 100. As shown in Fig. 1, each of the notch grooves 110, 210, 220 is formed in a parallelogram-like shape in a tread surface view. In the present embodiment, the notch groove 110 is served as a first notch groove.

Only one notch groove 110 is formed in a predetermined range corresponding to a position far away from the tire equatorial line CL by a distance of 1/8 of a width of the tread 20 (hereinafter, a tread width). The width of the tread 20 denotes a ground contact width of the tread 20 in a state in which a standard load is applied to the construction vehicle tire 10, which is mounted to a standard rim wheel with air filled at standard inner pressure designated by the vehicle.

In the present embodiment, the distance is approximately 200 mm (at a center position of the notch groove 110 in the tire width direction), and the width of the notch groove 110 is approximately 50 mm. The predetermined range denotes a range of approximately respective notch grooves 110 (namely, approximately ± 50mm).

Each of the notch grooves 210, 220 is formed in a slope-like shape and communicated with the width direction narrow groove 200. In the present embodiment, the notch grooves 210, 220 are served as a second notch groove. Each of the notch grooves 210, 220 has a shape similar to that of the notch groove 110.

The notch groove 210 is formed in a predetermined range corresponding to a position far away from the tire equatorial line CL by a distance of 1/16 of the tread width. The notch groove 220 is formed in a predetermined range corresponding to a position far away from the tire equatorial line CL by a distance of 1/4 of the tread width.

In the present embodiment, the distance relating to the notch groove 210 is approximately 100 mm (at a center position of the notch groove 210 in the tire width direction), and the distance relating to the notch groove 220 is approximately 400 mm (at a center position of the notch groove 220 in the tire width direction).

Regarding the notch groove 210, the predetermined range denotes a range of approximately respective notch grooves 210 (namely, approximately ± 50mm) to respective directions from the center position. On the other hand, regarding the notch groove 220, since the notch groove 220 is located at the outer side in the tire width direction and is closer to the circumferential direction groove 40, the predetermined range may further include a position far away from the center position to an inner direction by a distance of approximately two notch grooves 220 (namely, approximately 100 mm).

### (2) Shape of notch groove

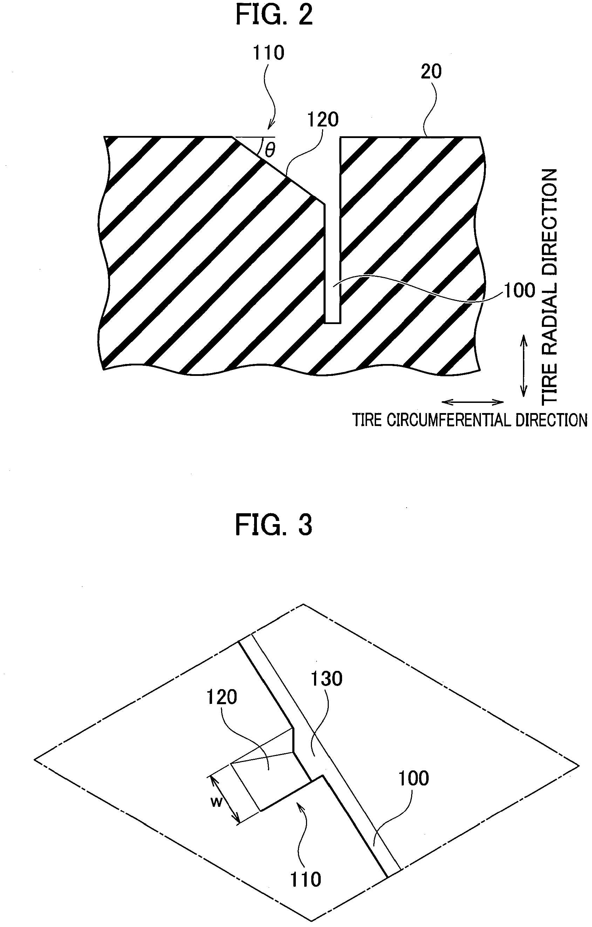

Fig. 2 is a cross-sectional view along the tire circumferential direction illustrating the width direction narrow groove 100 and the notch groove 110. Fig. 3 is a perspective view illustrating the notch groove 110.

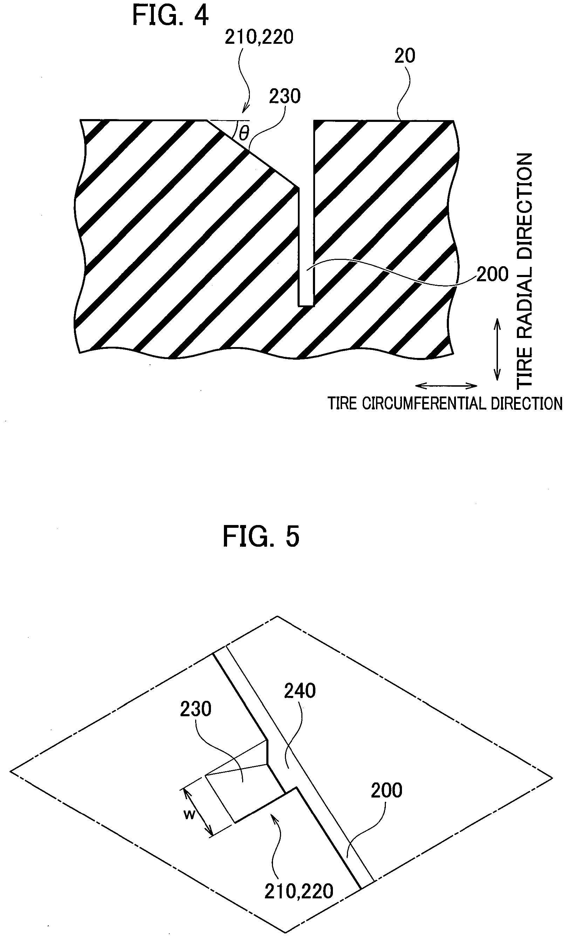

Further, Fig. 4 is a cross-sectional view along the tire circumferential direction illustrating the width direction narrow groove 200 and the notch grooves 210, 220. Fig. 5 is a perspective view illustrating the notch grooves 210, 220.

As shown in Fig. 2 and Fig. 3, the notch groove 110 is communicated with the width direction narrow groove 100. Specifically, the notch groove 110 has a slope portion 120 communicated with the width direction narrow groove 100.

The slope portion 120 is extended along the tire circumferential direction and inclined to be close to the inner side in the tire radial direction, from the surface of the tread 20 to the width direction narrow groove 100.

As described above, a width W of the slope portion 120, namely a width of the notch groove 100, is approximately 50 mm. An incline angle θ of the slope portion 120 against the surface of the tread 20 is approximately 20 degrees.

Since the notch groove 110 has the slope portion 120, air flows into the width direction narrow groove 100 through the slope portion 120 when the construction vehicle tire 10 is rolling. Specifically, the air collides with a groove wall 130 of the width direction narrow groove 100 through the slope portion 120 and spreads in the width direction narrow groove 100.

As shown in Fig. 4 and Fig. 5, each of the notch grooves 210, 220 is communicated with the width direction narrow groove 200. Specifically, each of the notch grooves 210, 220 has a slope portion 230 communicated with the width direction narrow groove 200. Each of the notch grooves 210, 220 has a shape similar to that of the notch groove 110.

The slope portion 230 is extended along the tire circumferential direction and inclined to be close to the inner side in the tire radial direction, from the surface of the tread 20 to the width direction narrow groove 200.

A width W of the slope 230, namely a width of each of the notch grooves 210, 220, is approximately 50 mm. An incline angle θ of the slope portion 230 is approximately 20 degrees.

Similar to the notch groove 110, air flows into the width direction narrow groove 200 through the slope portion 230 when the construction vehicle tire 10 is rolling. Specifically, the air collides with a groove wall 240 of the width direction narrow groove 200 through the slope portion 230 and spreads in the width direction narrow groove 200.

### (3) Functions and effects

Table 1 shows a result of an evaluation test of the construction vehicle tire 10 (by FEM).

**Table 1**

| | Temperature decrease of tread (average of respective positions) | |
|---|---|---|
| | Result compared to a width direction narrow groove without a notch groove | Result compared to a width direction narrow groove with a notch groove (position of 1/4W) |
| Width direction narrow groove 100 | 2.9 °C | 0.9 °C |
| Width | 4.3 °C | 2.3 °C |
| direction narrow groove 200 | | |

Specifically, Table 1 shows a temperature decrease of the surface of the tread 20 near each of the width direction narrow groove 100 and the width direction narrow groove 200. A tire specification and a test method are described below.

Tire specification: 63 inches tire (tread width: approximately 1,200 mm)
Test machine: drum test machine
Test method: after rolling the tire to be evaluated by using the drum test machine for a predetermined time, a temperature of the tread surface was measured at plural positions (at 1/4W, 3/16W, 1/8W, and 1/16W, and on tire equatorial line CL) along the groove wall forming the width direction narrow groove, and an average temperature thereof was calculated.

As shown in Table 1, in the width direction narrow groove 100, namely in a case in which the width direction narrow groove 100 is communicated with the shoulder lug groove 60 and the notch groove (notch groove 110) is formed in a predetermined range corresponding to a position far away by a distance of 1/8 of the tread width (1/8W), the temperature of the tread surface is decreased by 2.9 °C, compared to a width direction narrow groove without a notch groove, and the temperature of the tread surface is decreased by 0.9 °C, compared to a width direction narrow groove with only one notch groove formed at a position of 1/4W.

Further, in the width direction narrow groove 200, namely in a case in which the width direction narrow groove 200 is not communicated with the shoulder lug groove, an end portion of the width direction narrow groove 200 at the outer side in the tire width direction is terminated in a block (land portion) of the tread 20, and the notch grooves (notch grooves 210, 220) are formed in respective predetermined ranges corresponding to positions far away by distances of 1/16 and 1/4 of the tread width (1/16W, 1/4W), the temperature of the tread surface is decreased by 4.9 °C, compared to the width direction narrow groove without the notch groove, and the temperature of the tread surface is decreased by 2.3 °C, compared to the width direction narrow groove with only one notch groove formed at the position of 1/4W.

In this way, in the width direction narrow groove 100 communicated with the shoulder lug 60, by forming only one notch groove 110 near the position of 1/8W, air flows smoothly in the width direction narrow groove 100 to be invited into the circumferential direction groove 30 and the shoulder lug groove 60, so that a portion of the tread 20 adjacent to the width direction narrow groove 100 is evenly cooled.

That is, in the width direction narrow groove 100, the tread 20 can be cooled efficiently by optimizing the position of the notch groove more than by increasing the number of the notch grooves.

On the other hand, in the width direction narrow groove 200 in which the end portion at the outer side in the tire width direction is terminated in the block of the tread 20, by forming the notch grooves 210, 220 near the positions of 1/16W and 1/4W, the air flows smoothly in the width direction narrow groove 200 and an amount of the air invited into width direction narrow groove 200 can be increased, so that a portion of the tread 20 adjacent to the width direction narrow groove 200 is cooled efficiently.

That is, in the width direction narrow groove 200, the tread 20 can be cooled efficiently by increasing the amount of the air invited into width direction narrow groove 200 by forming the two notch grooves and by optimizing the positions of two notch grooves.

While, in a case in which the notch grooves are formed to be shifted from the positions described above, the smooth flow of the air is interrupted, and therefore it becomes difficult to cool the tread evenly in the tire width direction.

Further, with such shapes of the width direction narrow groove 100 and the width direction narrow groove 200, it is not necessary to form many notch grooves, and therefore there is substantially no influence to other performance such as wear resistant performance.

That is, according to the construction vehicle tire 10, a while of the tread 20 can be cooled efficiently while suppressing an influence to other performance. Especially, in the construction vehicle tire 10, the notch grooves are formed in the width direction narrow groove 100 and the width direction narrow groove 200 at respectively optimized positions in accordance with the shapes of the grooves, and thereby the whole of the tread 20 can be cooled further efficiently.

Further, as a countermeasure of the temperature increase of the tread 20, it is easy to adopt rubber with high heat resistance. Generally, the rubber with high heat resistance is inferior in the wear resistance. However, according to the construction vehicle tire 10, the temperature increase of the tread 20 can be suppressed by its structure, and thereby rubber superior in the wear resistance can be adopted and as a result the wear resistant performance of the tire can be improved.

In the present embodiment, the notch groove 110 has the slope portion 120. Similarly, each of the notch grooves 210, 220 has the slope portion 230. Each of the slope portions 120, 230 is inclined to be close to the inner side in the tire radial direction, toward each width direction narrow groove, so that the smooth air flow into each width direction narrow groove can be facilitated. With this, the whole of the tread 20 can be cooled further efficiently.

### (4) Other embodiments

As described above, the contents of the present invention are described with reference to the embodiment, however the present invention is not limited to those descriptions but only to the appended claims.

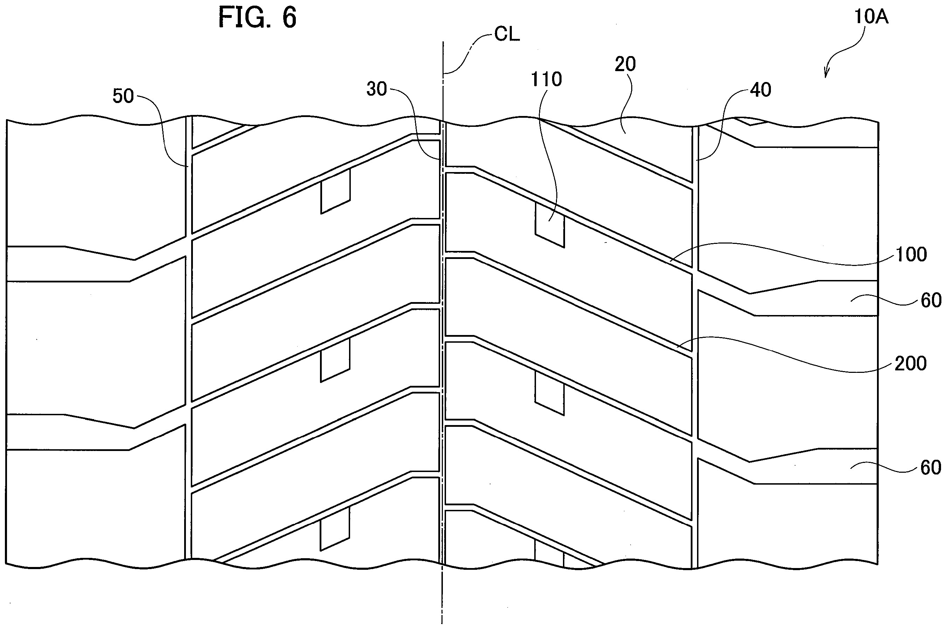

For example, the construction vehicle tire 10 described above may be modified as below. Fig. 6 is a plane developed view illustrating a part of a construction vehicle tire 10A according to one modified example. As shown in Fig. 6, compared to the construction vehicle tire 10, in the construction vehicle tire 10A, only the notch groove 110 is formed, and therefore the notch grooves 210, 220 are not formed.

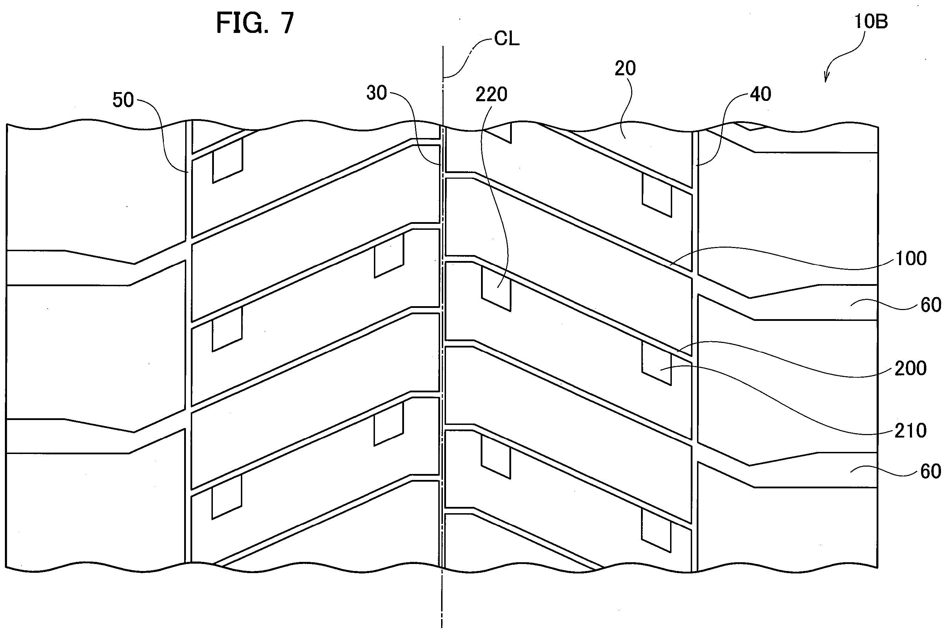

Further, Fig. 7 is a plane developed view illustrating a part of a construction vehicle tire 10B according to another modified example. As shown in Fig. 7, compared to the construction vehicle tire 10, in the construction vehicle tire 10B, only the notch grooves 210, 220 are formed, and therefore the notch groove 110 is not formed.

The construction vehicle tire 10A and the construction vehicle tire 10B are inferior to the construction vehicle tire 10, but they can also cool the whole of the tread 20 efficiently while suppressing an influence to other performance.

Further, in the embodiment described above, each of the notch grooves 110, 210, 220 (slope portions 120, 230) is formed in a parallelogram-like shape in the tread surface view, however the notch groove may not be formed in a parallelogram-like shape. For example, a portion corresponding to a side of the notch groove (slope portion) may not be parallel to the groove wall of the width direction narrow groove.

In the embodiment described above, each of the width direction narrow grooves 100, 200 is slightly inclined against the tire width direction, however the width direction narrow groove may not be inclined against the tire width direction, and therefore the width direction narrow groove may be extended parallel to the tire width direction.

In the embodiment described above, the shoulder lug groove 60 is extended to the end portion at the outer side in the tire width direction of the tread 20, however the shoulder lug groove 60 may not be extended to the end portion.

As described above, the embodiment of the present invention is described, however the present invention is not limited to the description and the drawings forming a part of the present disclosure but the present invention is defined in the appended claims.

### [Industrial Applicability]

The construction vehicle tire according to the present invention can cool the whole of the tread further efficiently while suppressing the influence to other performance.

### [Reference Signs List]

- 10, 10A, 10B:: construction vehicle tire
- 20:: tread
- 30, 40, 50:: circumferential direction groove
- 60:: shoulder lug groove
- 100:: width direction narrow groove
- 110:: notch groove
- 120:: slope portion
- 130:: groove wall
- 200:: width direction narrow groove
- 210, 220:: notch groove
- 230:: slope portion
- 240:: groove wall

## Claims

1. A construction vehicle tire (10A) comprising a tread (20), wherein the tread (20) includes:
a width direction narrow groove (100) extended in a tire width direction;
a center circumferential direction groove (30) communicated with the width direction narrow groove (100) and formed at a position including a tire equatorial line (CL);
an outer side circumferential direction groove (40, 50) communicated with the width direction narrow groove (100) and formed at an outer side in the tire width direction with respect to the width direction narrow groove (100); and
a shoulder lug groove (60) formed at the outer side in the tire width direction with respect to the width direction narrow groove (100) and communicated with the width direction narrow groove (100) through the outer side circumferential direction groove (40),
**characterized in that**:
the tread (20) includes a notch groove (110) having a slope portion (120), the notch groove (110) being communicated with the width direction narrow groove (100);
the slope portion (120) is extended along the tire circumferential direction and inclined to be close to the inner side in the tire radial direction, from the surface of the tread (20) to the width direction narrow groove (100),
only one notch groove (110) is formed in a predetermined range corresponding to a position far away from the tire equatorial line (CL) by a distance of 1/8 of a width of the tread (20), and the predetermined range is one notch groove (110) along the tire width direction.

2. A construction vehicle tire (10B) comprising a tread (20),
wherein the tread (20) includes:
a width direction narrow groove (200) extended in a tire width direction;
a center circumferential direction groove (30) communicated with the width direction narrow groove (200) and formed at a position including a tire equatorial line (CL); and
an outer side circumferential direction groove (40, 50) communicated with the width direction narrow groove (200) and formed at an outer side in the tire width direction with respect to the width direction narrow groove (200);
**characterized in that**:
the tread (20) includes a notch groove (210, 220) having a slope portion (230), the notch groove (210, 220) being communicated with the width direction narrow groove (200);
the slope portion (230) is extended along the tire circumferential direction and inclined to be close to the inner side in the tire radial direction, from the surface of the tread (20) to the width direction narrow groove (200),
the notch groove (210, 220) is formed in each of a predetermined range corresponding to a position far away from the tire equatorial line (CL) by a distance of 1/16 of a width of the tread and a predetermined range corresponding to a position far away from the tire equatorial line (CL) by a distance of 1/4 of the width of the tread (20), and
the predetermined range is one notch groove (210, 220) along the tire width direction.

3. A construction vehicle tire (10) comprising a tread (20),
wherein the tread (20) includes:
a first width direction narrow groove (100) extended in a tire width direction;
a second width direction narrow groove (200) adjacent to the first width direction narrow groove (100) in a tire circumferential direction and extended in the tire width direction;
a center circumferential direction groove (30) communicated with the first width direction narrow groove (100) and the second width direction narrow groove (200) and formed at a position including a tire equatorial line (CL);
an outer side circumferential direction groove (40, 50) communicated with the first width direction narrow groove (100) and the second width direction narrow groove (200) and formed at an outer side in the tire width direction with respect to the first width direction narrow groove (100) and the second width direction narrow groove (200); and
a shoulder lug groove (60) formed at the outer side in the tire width direction with respect to the first width direction narrow groove (100) and communicated with the first width direction narrow groove (100) through the outer side circumferential direction groove (40),
**characterized in that**:
the tread (20) includes a first notch groove (110) having a first slope portion (120), the first notch groove (110) being communicated with the first width direction narrow groove (100);
the tread (20) includes a second notch groove (210, 220) having a second slope portion (230), the second notch groove (210, 220) being communicated with the second width direction narrow groove (200);
the first slope portion (120) is extended along the tire circumferential direction and inclined to be close to the inner side in the tire radial direction, from the surface of the tread (20) to the first width direction narrow groove (100),
the second slope portion (230) is extended along the tire circumferential direction and inclined to be close to the inner side in the tire radial direction, from the surface of the tread (20) to the second width direction narrow groove (200),
only one first notch groove (110) is formed in a predetermined range corresponding to a position far away from the tire equatorial line (CL) by a distance of 1/8 of a width of the tread (20),
the second notch groove (210, 220) is formed in each of a predetermined range corresponding to a position far away from the tire equatorial line (CL) by a distance of 1/16 of the width of the tread (20) and a predetermined range corresponding to a position far away from the tire equatorial line (CL) by a distance of 1/4 of the width of the tread (20), and
the predetermined range is one first notch groove (110) or one second notch groove (210, 220) along the tire width direction.

## Patentansprüche

1. Baufahrzeugreifen (10A), der eine Lauffläche (20) umfasst,
wobei die Lauffläche (20) Folgendes einschließt:
eine schmale Breitenrichtungsrille (100), die sich in einer Reifenbreitenrichtung erstreckt,
eine mittige Umfangsrichtungsrille (30), die mit der schmalen Breitenrichtungsrille (100) verbunden und an einer Position geformt ist, die eine Reifenäquatorlinie (CL) einschließt,
eine Außenseiten-Umfangsrichtungsrille (40, 50), die mit der schmalen Breitenrichtungsrille (100) verbunden und an einer in der Reifenbreitenrichtung äußeren Seite in Bezug auf die schmale Breitenrichtungsrille (100) geformt ist, und
eine Schulterstollenrille (60), die an der in der Reifenbreitenrichtung äußeren Seite in Bezug auf die schmale Breitenrichtungsrille (100) geformt und durch die Außenseiten-Umfangsrichtungsrille (40) mit der schmalen Breitenrichtungsrille (100) verbunden ist,
**dadurch gekennzeichnet, dass**:
die Lauffläche (20) eine Kerbrille (110) einschließt, die einen Flankenabschnitt (120) aufweist, wobei die Kerbrille (110) mit der schmalen Breitenrichtungsrille (100) verbunden ist,
der Flankenabschnitt (120) sich entlang der Reifenumfangsrichtung erstreckt und so geneigt ist, dass er der in der Reifenradialrichtung inneren Seite nahe ist, von der Oberfläche der Lauffläche (20) bis zu der schmalen Breitenrichtungsrille (100),
nur eine Kerbrille (110) in einem vorbestimmten Bereich geformt ist, der einer Position entspricht, weit entfernt von der Reifenäquatoriallinie (CL) um eine Strecke von 1/8 einer Breite der Lauffläche (20), und
der vorbestimmte Bereich eine Kerbrille (110) entlang der Reifenbreitenrichtung ist.

2. Baufahrzeugreifen (10B), der eine Lauffläche (20) umfasst,
wobei die Lauffläche (20) Folgendes einschließt:
eine schmale Breitenrichtungsrille (200), die sich in einer Reifenbreitenrichtung erstreckt,
eine mittige Umfangsrichtungsrille (30), die mit der schmalen Breitenrichtungsrille (200) verbunden und an einer Position geformt ist, die eine Reifenäquatorlinie (CL) einschließt, und
eine Außenseiten-Umfangsrichtungsrille (40, 50), die mit der schmalen Breitenrichtungsrille (200) verbunden und an einer in der Reifenbreitenrichtung äußeren Seite in Bezug auf die schmale Breitenrichtungsrille (200) geformt ist,
**dadurch gekennzeichnet, dass**:
die Lauffläche (20) eine Kerbrille (210, 220) einschließt, die einen Flankenabschnitt (230) aufweist, wobei die Kerbrille (210, 220) mit der schmalen Breitenrichtungsrille (200) verbunden ist,
der Flankenabschnitt (230) sich entlang der Reifenumfangsrichtung erstreckt und so geneigt ist, dass er der in der Reifenradialrichtung inneren Seite nahe ist, von der Oberfläche der Lauffläche (20) bis zu der schmalen Breitenrichtungsrille (200),
die Kerbrille (210, 220) in sowohl einem vorbestimmten Bereich, der einer Position entspricht, weit entfernt von der Reifenäquatoriallinie (CL) um eine Strecke von 1/16 einer Breite der Lauffläche, als auch einem vorbestimmten Bereich, der einer Position entspricht, weit entfernt von der Reifenäquatoriallinie (CL) um eine Strecke von 1/4 der Breite der Lauffläche (20), geformt ist, und
der vorbestimmte Bereich eine Kerbrille (210, 220) entlang der Reifenbreitenrichtung ist.

3. Baufahrzeugreifen (10), der eine Lauffläche (20) umfasst,
wobei die Lauffläche (20) Folgendes einschließt:
eine erste schmale Breitenrichtungsrille (100), die sich in einer Reifenbreitenrichtung erstreckt,
eine zweite schmale Breitenrichtungsrille (200), die in einer Reifenumfangsrichtung an die erste schmale Breitenrichtungsrille (100) angrenzt und sich in der Reifenbreitenrichtung erstreckt,
eine mittige Umfangsrichtungsrille (30), die mit der ersten schmalen Breitenrichtungsrille (100) und der zweiten schmalen Breitenrichtungsrille (200) verbunden und an einer Position geformt ist, die eine Reifenäquatorlinie (CL) einschließt,
eine Außenseiten-Umfangsrichtungsrille (40, 50), die mit der ersten schmalen Breitenrichtungsrille (100) und der zweiten schmalen Breitenrichtungsrille (200) verbunden und an einer in der Reifenbreitenrichtung äußeren Seite in Bezug auf die erste schmale Breitenrichtungsrille (100) und die zweite schmale Breitenrichtungsrille (200) geformt ist, und
eine Schulterstollenrille (60), die an der in der Reifenbreitenrichtung äußeren Seite in Bezug auf die erste schmale Breitenrichtungsrille (100) geformt und durch die Außenseiten-Umfangsrichtungsrille (40) mit der ersten schmalen Breitenrichtungsrille (100) verbunden ist,
**dadurch gekennzeichnet, dass**:
die Lauffläche (20) eine erste Kerbrille (110) einschließt, die einen ersten Flankenabschnitt (120) aufweist, wobei die erste Kerbrille (110) mit der ersten schmalen Breitenrichtungsrille (100) verbunden ist,
die Lauffläche (20) eine zweite Kerbrille (210, 220) einschließt, die einen zweiten Flankenabschnitt (230) aufweist, wobei die zweite Kerbrille (210, 220) mit der zweiten schmalen Breitenrichtungsrille (200) verbunden ist,
der erste Flankenabschnitt (120) sich entlang der Reifenumfangsrichtung erstreckt und so geneigt ist, dass er der in der Reifenradialrichtung inneren Seite nahe ist, von der Oberfläche der Lauffläche (20) bis zu der ersten schmalen Breitenrichtungsrille (100),
der zweite Flankenabschnitt (230) sich entlang der Reifenumfangsrichtung erstreckt und so geneigt ist, dass er der in der Reifenradialrichtung inneren Seite nahe ist, von der Oberfläche der Lauffläche (20) bis zu der zweiten schmalen Breitenrichtungsrille (200),
nur eine erste Kerbrille (110) in einem vorbestimmten Bereich geformt ist, der einer Position entspricht, weit entfernt von der Reifenäquatoriallinie (CL) um eine Strecke von 1/8 der Breite der Lauffläche (20),
die zweite Kerbrille (210, 220) in sowohl einem vorbestimmten Bereich, der einer Position entspricht, weit entfernt von der Reifenäquatoriallinie (CL) um eine Strecke von 1/16 der Breite der Lauffläche (20), als auch einem vorbestimmten Bereich, der einer Position entspricht, weit entfernt von der Reifenäquatoriallinie (CL) um eine Strecke von 1/4 der Breite der Lauffläche (20), geformt ist und
der vorbestimmte Bereich eine erste Kerbrille (110) oder eine zweite Kerbrille (210, 220) entlang der Reifenbreitenrichtung ist.

## Revendications

1. Bandage pneumatique pour véhicule de construction (10A) comprenant une bande de roulement (20),
dans lequel la bande de roulement (20) inclut :
une rainure étroite dans la direction de la largeur (100) s'étendant dans une direction de la largeur du bandage pneumatique ;
une rainure centrale dans la direction circonférentielle (30) en communication avec la rainure étroite dans la direction de la largeur (100) et formée à une position incluant une ligne équatoriale du bandage pneumatique (CL) ;
une rainure dans la direction circonférentielle du côté externe (40, 50) en communication avec la rainure étroite dans la direction de la largeur (100) et formée à un côté externe, dans la direction de la largeur du bandage pneumatique, par rapport à la rainure étroite dans la direction de la largeur (100) ; et
une rainure à barrette d'épaulement (60) formée au côté externe, dans la direction de la largeur du bandage pneumatique, par rapport à la rainure étroite dans la direction de la largeur (100) et en communication avec la rainure étroite dans la direction de la largeur (100) à travers la rainure dans la direction circonférentielle du côté externe (40) ;
**caractérisé en ce que** :
la bande de roulement (20) inclut une rainure à encoche (110) comportant une partie inclinée (120), la rainure à encoche (110) étant en communication avec la rainure étroite dans la direction de la largeur (100) ;
la partie inclinée (120) s'étend le long de la direction circonférentielle du bandage pneumatique et est inclinée de sorte à être proche du côté interne, dans la direction radiale du bandage pneumatique, de la surface de la bande de roulement (20) vers la rainure étroite dans la direction de la largeur (100) ;
une seule rainure à encoche (110) est formée dans une zone prédéterminée correspondant à une position très éloignée de la ligne équatoriale du bandage pneumatique (CL), d'une distance représentant 1/8 d'une largeur de la bande de roulement (20) ; et
la zone prédéterminée est une rainure à encoche (110) le long de la direction de la largeur du bandage pneumatique.

2. Bandage pneumatique pour véhicule de construction (10B), comprenant une bande de roulement (20),
dans lequel la bande de roulement (20) inclut :
une rainure étroite dans la direction de la largeur (200) s'étendant dans une direction de la largeur du bandage pneumatique ;
une rainure centrale dans la direction circonférentielle (30) en communication avec la rainure étroite dans la direction de la largeur (200) et formée à une position incluant une ligne équatoriale d bandage pneumatique (CL) ; et
une rainure dans la direction circonférentielle du côté externe (40, 50) en communication avec la rainure étroite dans la direction de la largeur (200) et formée à un côté externe, dans la direction de la largeur du bandage pneumatique, par rapport à la rainure étroite dans la direction de la largeur (200) ;
**caractérisé en ce que** :
la bande de roulement (20) inclut une rainure à encoche (210, 220) comportant une partie inclinée (230), la rainure à encoche (210, 220) étant en communication avec la rainure étroite dans la direction de la largeur (200) ;
la partie inclinée (230) s'étend le long de la direction circonférentielle du bandage pneumatique et est inclinée de sorte à être proche du côté interne, dans la direction radiale du bandage pneumatique, de la surface de la bande de roulement (20) vers la rainure étroite dans la direction de la largeur (200) ;
la rainure à encoche (210, 220) est formée dans chacun d'une zone prédéterminée, correspondant à une position très éloignée de la ligne équatoriale du bandage pneumatique (CL), d'une distance représentant 1/16 d'une largeur de la bande de roulement, et d'une zone prédéterminée correspondant à une position très éloignée de la ligne équatoriale du bandage pneumatique (CL), d'une distance représentant 1/4 de la largeur de la bande de roulement (20) ; et
la zone prédéterminée est une rainure à encoche (210, 220) le long de la direction de la largeur du bandage pneumatique.

3. Bandage pneumatique pour véhicule de construction (10) comprenant une bande de roulement (20),
dans lequel la bande de roulement (20) inclut :
une première rainure étroite dans la direction de la largeur (100) s'étendant dans une direction de la largeur du bandage pneumatique ;
une deuxième rainure étroite dans la direction de la largeur (200) adjacente à la première rainure étroite dans la direction de la largeur (100), dans une direction circonférentielle du bandage pneumatique, et s'étendant dans la direction de la largeur du bandage pneumatique ;
une rainure centrale dans la direction circonférentielle (30) en communication avec la première rainure étroite dans la direction de la largeur (100) et avec la deuxième rainure étroite dans la direction de la largeur (200) et formée à une position incluant une ligne équatoriale du bandage pneumatique (CL) ;
une rainure dans la direction circonférentielle du côté externe (40, 50) en communication avec la première rainure étroite dans la direction de la largeur (100) et la deuxième rainure étroite dans la direction de la largeur (200) et formée à un côté externe, dans la direction de la largeur du bandage pneumatique, par rapport à la première rainure étroite dans la direction de la largeur (100) et la deuxième rainure étroite dans la direction de la largeur (200); et
une rainure à barrette d'épaulement (60) formée au côté externe, dans la direction de la largeur du bandage pneumatique, par rapport à la première rainure étroite dans la direction de la largeur (100) et en communication avec la première rainure étroite dans la direction de la largeur (100) à travers la rainure dans la direction circonférentielle du côté externe (40) ;
**caractérisé en ce que** :
la bande de roulement (20) inclut une première rainure à encoche (110) comportant une première partie inclinée (120), la première rainure à encoche (110) étant en communication avec la première rainure étroite dans la direction de la largeur (100) ;
la bande de roulement (20) inclut une deuxième rainure à encoche (210, 220) comportant une deuxième partie inclinée (230), la deuxième rainure à encoche (210, 220) étant en communication avec la deuxième rainure étroite dans la direction de la largeur (200) ;
la première partie inclinée (120) s'étend le long de la direction circonférentielle du bandage pneumatique et est inclinée de sorte à être proche du côté interne, dans la direction radiale du bandage pneumatique, de la surface de la bande de roulement (20) vers la première rainure étroite dans la direction de la largeur (100) ;
la deuxième partie inclinée (230) s'étend le long de la direction circonférentielle du bandage pneumatique et est inclinée de sorte à être proche du côté interne, dans la direction radiale du bandage pneumatique, de la surface de la bande de roulement (20) vers la deuxième rainure étroite dans la direction de la largeur (200) ;
seule une première rainure à encoche (110) est formée dans une zone prédéterminée correspondant à une position très éloignée de la ligne équatoriale du bandage pneumatique (CL), d'une distance représentant 1/8 d'une largeur de la bande de roulement (20) ;
la deuxième rainure à encoche (210, 220) est formée dans chacun d'une zone prédéterminée correspondant à une position très éloignée de la ligne équatoriale du bandage pneumatique (CL), d'une distance représentant 1/16 de la largeur de la bande de roulement(20) et d'une zone prédéterminée correspondant à une position très éloignée de la ligne équatoriale du bandage pneumatique (CL), d'une distance représentant 1/4 de la largeur de la bande de roulement (20) ; et
la zone prédéterminée est une première rainure à encoche (110) ou une deuxième rainure à encoche (210, 220) le long de la direction de la largeur du bandage pneumatique.
